# EUROPÄISCHE PATENTSCHRIFT

(11) **EP 3 707 485 B1**
(45) Veröffentlichungstag und Bekanntmachung des Hinweises auf die Patenterteilung: **24.08.2022**
(21) Anmeldenummer: 18800115.0
(22) Anmeldetag: 07.11.2018
(51) Int. Cl.: G01L 9/00, G01L 19/06, G01L 19/14

(54) **DRUCKSENSORSYSTEM MIT SCHUTZ VOR EINFRIERENDEM MEDIUM**
PRESSURE SENSOR SYSTEM HAVING PROTECTION AGAINST FREEZING MEDIUM
SYSTÈME CAPTEUR DE PRESSION AVEC PROTECTION CONTRE UN AGENT GELANT

(30) Priorität: 08.11.2017 DE 102017126121
(43) Veröffentlichungstag der Anmeldung: 16.09.2020
(73) Patentinhaber: TDK Electronics AG, 81671 München (DE)
(72) Erfinder: WOHLGEMUTH, Christian, 12249 Berlin (DE); BOHL, Benjamin, 10407 Berlin (DE)
(74) Vertreter: Epping - Hermann - Fischer
(86) Internationale Anmeldenummer: PCT/EP2018/080497
(87) Internationale Veröffentlichungsnummer: WO 2019/092035

(56) Entgegenhaltungen:
- EP-A1- 2 993 453
- WO-A1-2010/013216
- WO-A2-2012/089625
- DE-A1-102012 204 414
- DE-U1-202007 015 980
- US-A1- 2011 098 947

## Beschreibung

Die Erfindung betrifft ein Drucksensorsystem, das vor einer Zerstörung durch ein einfrierendes Medium geschützt ist.

Zum Messen von Drücken in einer wässrigen Lösung, beispielsweise in Wasser oder einer Harnstofflösung, kann ein Drucksensorsystem mit einem piezoresistiven Drucksensorelement eingesetzt werden. Ein derartiges Drucksensorelement umfasst eine Membran in Form einer biegsamen Platte. Das Drucksensorelement ist derart an einen Strömungskanal angekoppelt, dass ein Medium, zum Beispiel die oben genannten wässrigen Lösungen, die Membran/biegsame Platte anströmen. In Abhängigkeit von dem Druck des Mediums wird die biegsame Platte ausgelenkt. An Anschlusskontakten des Drucksensorelements kann in Abhängigkeit von dem Druck des Mediums beziehungweise der Verbiegung der biegsamen Platte eine Widerstandsänderung gemessen werden.

Bei dem oben beschriebenen piezoresistiven Drucksensorsystem kann die biegsame Platte beziehungsweise Membran als eine dünne Schicht ausgebildet sein. Wenn sich das Drucksensorsystem in einer kalten Umgebung befindet, besteht die Gefahr, dass das Medium in dem Strömungskanal, der an die biegsame Platte/Membran gekoppelt ist, einfriert. Dabei muss verhindert werden, dass das einfrierende Medium die dünne Membranschicht absprengt beziehungsweise beschädigt, sodass das Drucksensorsystem zerstört würde. DE 202007015980 U1 betrifft einen Drucksensor mit einem Siliziumchip als Träger für ein piezoresistives Sensorelement, das eine Membran aufweist. In einem Druckkanal wird ein zu messendes Medium der Membran zugeführt. Der Druckkanal setzt sich unterhalb der Membran mit einer kegelförmigen Erweiterung in einem weiteren Gehäuseteil fort. DE 102012204414 A1 zeigt ein Drucksensor mit einem Sensorchip, der eine Membran aufweist. Der Sensorchip ist auf einem Stützteil angeordnet. Das Stützteil weist eine zylinderförmige Aussparung auf, die als Strömungskanal für ein Medium dient und in einen trichterförmigen Strömungskanal einmündet, der unmittelbar an die Membran angrenzt. WO 2012/089625 A2 betrifft einen Drucksensor, bei dem ein Sensorelement in einer Kammer unterhalb einer Membran angeordnet ist. In einem Strömungskanal, durch den ein fluides Medium auf die Membran wirkt, ist ein kompressibles Element angeordnet. Das kompressible Element weist in seinem Zentrum eine Druckleitung auf, durch die das fluide Medium auf die Membran einwirkt. WO 2010/013216 A1 zeigt einen Drucksensor, bei dem unter einer Membran ein Strömungskanal angeordnet ist, der unmittelbar unterhalb der Membran einen geringeren Durchmesser als in einem weiter entfernten Bereich aufweist. Der Abschnitt des Strömungskanals mit dem größeren Durchmesser ist als eine Kavität innerhalb eines kompressiblen Elements angeordnet. US 2011/098947 A1 betrifft ein Unterwasser-Tiefenmessgerät, das einen piezoresistiven keramischen Wandler, der mit einer Schaltung zur Ausgabe eines Absolutdrucks verbunden ist, enthält. EP 2993453 A1 betrifft ein Sensorelement mit einem Substrat, das ein vorzugsweise in Dünnschichttechnik aufgebrachtes, dehnungsempfindliches Element aufweist, das zur Messung der Verformung des Substrats bei Druck oder Kraft eingesetzt wird.

Ein Anliegen der vorliegenden Erfindung ist es, ein Drucksensorsystem anzugeben, bei dem ein Drucksensorelement des Drucksensorsystems vor einer Zerstörung durch ein einfrierendes Medium geschützt ist.

Das erfindungsgemäße Drucksensorsystem mit Schutz vor einem einfrierenden Medium ist im Patentanspruch 1 angegeben. Das Drucksensorsystem umfasst ein Drucksensorelement mit einer biegsamen Platte, wobei das Drucksensorelement als ein piezoresistives Sensorelement ausgebildet ist. Das Drucksensorsystem umfasst des Weiteren ein Trägerelement, auf dem das Drucksensorelement angeordnet ist. In dem Trägerelement verläuft ein Strömungskanal zur Zuführung des Mediums zu der biegsamen Platte des Drucksensorelements. Der Strömungskanal weist mindestens einen Teilabschnitt auf, dessen Längsrichtung senkrecht unter der biegsamen Platte des Drucksensorelements verläuft. Das Medium strömt die biegsame Platte daher aus dem unmittelbar unter der biegsamen Platte angeordneten Teilabschnitt des Strömungskanals senkrecht an. Der Kanalquerschnitt dieses mindestens einen Teilabschnitts des Strömungskanals ist an keiner Stelle innerhalb des Teilabschnitts des Strömungskanals kleiner als die Fläche der biegsamen Platte des Drucksensorelements.

Dies bedeutet, dass der mindestens eine Teilabschnitt des Strömungskanals an keiner Stelle innerhalb des Teilabschnitts des Strömungskanals eine Hinterschneidung aufweist. An keiner Stelle des mindestens einen Teilabschnitts des Kanals ragt eine Engstelle, beispielsweise in Form eines Materialvorsprungs, der innerhalb des Strömungskanals in einer Projektionsfläche der biegsamen Platte des Drucksensorelements liegt, in den Strömungskanal hinein. Insbesondere gibt es in dem Strömungskanal kein Gegenlager, an dem sich ein Medium, das sich beim Einfrieren ausdehnt, abstützen könnte. Der Strömungskanal weist daher keinen Hinterschnitt auf.

Im Falle des Einfrierens des Mediums können sich somit in dem Strömungskanal keine Drücke aufbauen, mit denen das Medium gegen die biegsame Platte drückt. Der Strömungskanal ist stattdessen derart geformt, dass in dem Strömungskanal infolge des Einfrierens des Mediums aufbauende Drücke in entgegengesetzter Richtung zu dem Drucksensorelement, das heißt von dem Drucksensorelement weg, abgeleitet werden.

Der unter dem Drucksensorelement angeordnete mindestens eine Teilabschnitt des Strömungskanals kann sich beispielsweise in Längsrichtung entgegengesetzt zur Richtung der biegsamen Platte des Drucksensorelements verbreitern aber keinesfalls verengen. Entscheidend ist, dass in dem unter der biegsamen Platte liegenden Teilabschnitt des Strömungskanals kein Materialvorsprung vorhanden ist, der in einer Ebene des mindestens einen Teilabschnitts des Strömungskanals parallel zu der Fläche der biegsamen Platte/Membran des Drucksensorelements liegt.

Unter dem mindestens einen Teilabschnitt des Strömungskanals ist ein kompressibles Element in einen Hohlraum des Trägerelements eingebaut. Wenn das Medium in dem mindestens einen Teilabschnitt senkrecht unter der biegsamen Platte des Drucksensorelements einfriert, drückt das sich ausdehnende Medium gegen das kompressible Element. Das kompressible Element kann beispielsweise ein geschlossenporiger Schaum, insbesondere ein Silikonschaum, sein. Das kompressible Element wirkt als Einfrierschutz und verhindert aufgrund seiner kompressiblen

Eigenschaft, dass unterhalb des mindestens einen Teilabschnitts des Strömungskanals ein festes Wiederlager bei der Eisbildung beim Einfrieren des Mediums entsteht.

Um im Falle des Einfrierens des Mediums die Höhe der Eissäule, die unterhalb der biegsamen Platte senkrecht auf die biegsame Platte des Drucksensorelements wirkt, zu minimieren, kann die Zuführung des Mediums im Trägerelement über abgewinkelte Strömungskanäle erfolgen. Ein Teil der Medienzuführungskanäle kann gemäß einer Ausführungsvariante des Drucksensorsystems im Gehäuse des Drucksensors liegen.

Das vorgeschlagene Drucksensorsystem ermöglicht eine Reduktion der Bauteile und Prozessschritte, indem bewusst auf ein ölgefülltes System verzichtet wird und das Drucksensorelement dennoch in ein einfrierrobustes Sensorsystem integriert werden kann. Ein weiterer Vorteil ist, dass der Aufbau des Drucksensorsystems die Integration in ein für automotive Anwendungen typisches Gehäuse ermöglicht.

Die Erfindung wird im Folgenden anhand von Figuren, die Ausführungsbeispiele der vorliegenden Erfindung zeigen, näher erläutert. Es zeigen:
Figur 1 eine Gesamtansicht eines Drucksensorsystems in einer Querschnittsdarstellung; und
Figur 2 eine vergrößerte Detailansicht eines Ausschnitts des Drucksensorsystems der Figur 1.

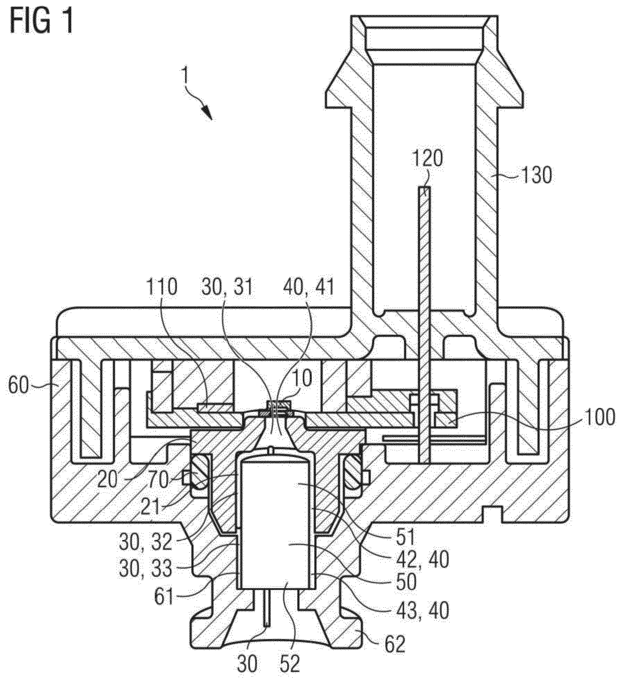

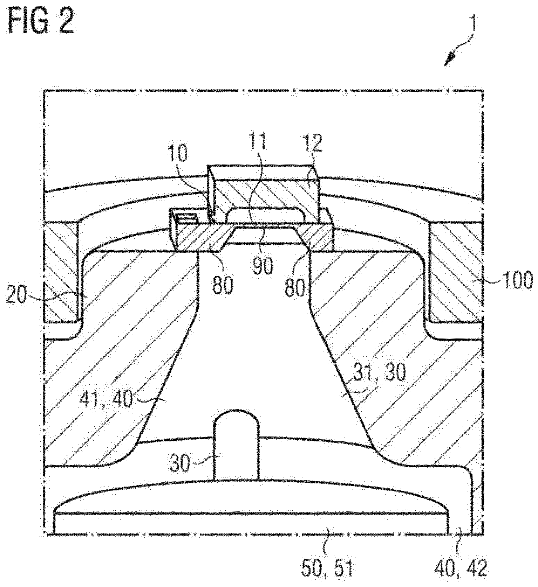

Die verschiedenen Komponenten eines Drucksensorsystem 1 mit Schutz vor einem einfrierenden Medium werden anhand der Figuren 1 und 2 näher beschrieben. Das Drucksensorsystem 1 umfasst ein Drucksensorelement 10 mit einer biegsamen Platte beziehungsweise Membran 11. Das Drucksensorelement 10 ist als ein piezoresistives Sensorelement ausgebildet. Beim Einwirken eines Drucks auf die Biegeplatte 11 tritt eine Verformung der Biegeplatte auf, die eine messbare Widerstandsänderung an den piezoresistiven Widerständen zur Folge hat. Das Drucksensorsystem umfasst des Weiteren ein Trägerelement 20, auf dem das Drucksensorelement 10 angeordnet ist.

In dem Trägerelement 20 verläuft ein Strömungskanal 30 zur Sicherstellung der Medienzuführung zu dem Sensorelement 10 und insbesondere zu der biegsamen Platte 11. Der Strömungskanal 30 weist mindestens einen Teilabschnitt 31 auf, dessen Längsrichtung senkrecht unter der biegsamen Platte 11 verläuft. Das in dem mindestens einen Teilabschnitt 31 strömende Medium kann somit die biegsame Platte 11 senkrecht anströmen. Das Drucksensorsystem ist derart aufgebaut, dass ein Kanalquerschnitt des mindestens einen Teilabschnitts 31 des Strömungskanals 30 an keiner Stelle innerhalb dieses Teilabschnitts 31 kleiner als die Fläche der biegsamen Platte 11 ist.

Die Formgebung der Medienzuführung ist im Bereich des drucksensitiven Elements 10 somit derart gewählt, dass in dem Teilabschnitt 31 des Strömungskanals 30 bis zur sensitiven Struktur/Biegeplatte 11 kein Hinterschnitt vorhanden ist. Das heißt, dass an keiner Stelle des mindestens einen Teilabschnitts 31 des Strömungskanals 30 ein Materialvorsprung in den Strömungskanal hineinragt, der innerhalb des Strömungskanals in einer Projektionsfläche der biegsamen Platte 11 liegt. Wie anhand der Figuren 1 und 2 zu erkennen ist, gibt es zum Beispiel keinen Materialvorsprung in dem mindestens einen Teilabschnitt 31 des Strömungskanals 30, der sich an einer Stelle des Teilabschnitts 31 des Strömungskanals von einer Seitenwand des Strömungskanals ausgehend in einem Abstand zu der biegsamen Platte 11 in den Strömungskanal hinein und zwar in senkrechter Projektion zur biegsamen Platte bis unter die biegsame Platte erstreckt.

In dem mindestens einen Teilabschnitt 31 des Strömungskanals, der senkrecht unter der biegsamen Platte 11 liegt, gibt es insbesondere kein Konstruktionselement, das als eine Hinterschneidung in den Strömungskanal hineinragt. Dadurch wird verhindert, dass innerhalb des Teilabschnitts 31 des Strömungskanals senkrecht unterhalb der Biegeplatte 11 ein festes Wiederlager vorhanden wäre, an der sich ein einfrierendes Medium bei einer Volumenausdehnung abstützen könnte und somit gegen die biegsame Platte 11 drücken könnte. Aufgrund der Ausgestaltung des Strömungskanals 30 ohne Hinterschnitt kann somit verhindert werden, dass ein einfrierendes Medium die biegsame Platte 11 beschädigt und gegebenenfalls von ihrem Sockel absprengt.

Das Drucksensorsystem weist einen Hohlraum 40 mit einem ersten Bereich 41 und mit einem sich daran anschließenden zweiten Bereich 42 auf. Der erste Bereich 41 und der zweite Bereich 42 des Hohlraums verlaufen innerhalb des Trägerelements. Der Hohlraum 40 ist innerhalb des Trägerelements 20 von einer Innenwand 21 des Trägerelements 20 umgeben. Gemäß der in den Figuren 1 und 2 gezeigten Ausführungsform des Drucksensorsystems verjüngt sich der erste Bereich 41 des Hohlraums trichterförmig in Richtung der biegsamen Platte 11 des Drucksensorelements 10. Der mindestens eine Teilabschnitt 31 des Strömungskanals 30 wird von diesem ersten Bereich 41 des Hohlraums 40 gebildet. Infolgedessen verjüngt sich auch der mindestens eine Teilabschnitt 31 des Strömungskanals 30 trichterförmig in Richtung der biegsamen Platte 11 des Drucksensorelements. Der zweite Bereich 42 des Hohlraums 40 ist stattdessen zylinderförmig ausgebildet.

Eine Längsrichtung des ersten und zweiten Bereichs 41, 42 des Hohlraums 40 erstreckt sich in dem Trägerelement 20 senkrecht zu der Fläche der biegsamen Platte 11 des Drucksensorelements 10. Wie anhand der Figuren 1 und 2 zu erkennen ist, ist eine Querschnittsfläche des ersten Bereichs 41 des Hohlraums 40 an jeder Position entlang der Längsrichtung des ersten Bereichs 41 des Hohlraums 40 mindestens so groß wie die Fläche der biegsamen Platte 11 des Drucksensorelements 10. Eine Querschnittsfläche des zweiten Bereichs 42 des Hohlraums 40 ist an jeder Position entlang der Längsrichtung des zweiten Bereichs 42 des Hohlraums 40 größer als die Fläche der biegsamen Platte 11 des Drucksensorelements 10. Der Hohlraum 40 verbreitert sich somit ausgehend von einem Bereich unmittelbar unterhalb der Biegeplatte 11 immer weiter in Richtung der entfernter liegenden Bereiche.

Gemäß einer möglichen Ausführungsform umfasst das Drucksensorsystem 1 ein kompressibles Element 50, das in dem zweiten Bereich 42 des Hohlraums 40 angeordnet ist. Das kompressible Element 50 ist dazu ausgebildet, beim Einfrieren des Mediums von dem Medium komprimiert zu werden. Das kompressible Element kann insbesondere als ein geschlossen poriger Schaum, beispielsweise als ein Silikonschaum, ausgebildet sein. Durch Integration des kompressiblen Elements 50 in den Hohlraum 40, insbesondere den zweiten Bereich 42 des Hohlraums 40, kann ein festes Wiederlager im Hohlraum 40 beziehungsweise in dem Strömungskanal 30 beim Einfrieren des Mediums verhindert werden.

Gemäß der in den Figuren 1 und 2 gezeigten Ausführungsform des Drucksensorsystems 1 ist das kompressible Element 50 zylinderförmig ausgebildet. Das kompressible Element 50 ist in dem zweiten Bereich 42 des Hohlraums 40 unter dem ersten Bereich 41 des Hohlraums angeordnet. Durch das kompressible Element 50 wird somit ein Abschluss des Bereiches unterhalb des sensitiven Elements 10 gebildet. Insbesondere kann das kompressible Element 50 mittig unter dem trichterförmigen ersten Bereich 41 des Hohlraums 40 beziehungsweise des trichterförmigen Teilabschnitts 31 des Strömungskanals 30 angeordnet sein.

Eine Querschnittsfläche des zweiten Bereichs 42 des Hohlraums 40 ist größer als die Querschnittsfläche der Öffnung des trichterförmigen ersten Bereichs 41 des Hohlraums. Des Weiteren ist eine Querschnittsfläche des kompressiblen Elements 50 mindestens so groß wie die Querschnittsfläche der Öffnung des trichterförmigen ersten Bereichs 41 des Hohlraums 40. Speziell bei der in den Figuren 1 und 2 gezeigten Ausführungsform des Drucksensorsystems ist die Querschnittsfläche des kompressiblen Elements 50 größer als die Querschnittsfläche der Öffnung des trichterförmigen ersten Bereichs 41 des Hohlraums 40. Der erste Bereich 41 des Hohlraums 40 ist daher durch das kompressible Element 50 abgeschlossen. Wie anhand der Figuren 1 und 2 weiter zu erkennen ist, ist die Querschnittsfläche des kompressiblen Elements 50 kleiner als die Querschnittsfläche des zweiten Bereichs 42 des Hohlraums 40.

Der Strömungskanal 30 weist in dem Trägerelement 20 mindestens einen weiteren Teilabschnitt 32 auf, der sich an den mindestens einen Teilabschnitt 31 des Strömungskanals anschließt. Der weitere Teilabschnitt 32 des Strömungskanals 30 liegt zwischen dem kompressiblen Element 50, insbesondere einer äußeren Oberfläche des kompressiblen Elements 50, und einer den zweiten Bereich 42 des Hohlraums 40 begrenzenden Innenwand 21 des Trägerelements 20. Im Bereich 42 des Hohlraums stellt eine äußere Oberfläche des kompressiblen Elements 50 somit einen seitlichen Abschluss der Medienzuführungskanäle 30 dar.

Da der Strömungskanal im zweiten Bereich 42 des Hohlraums zwischen der Innenwand 21 des Trägerelements 20 und der äußeren Oberfläche des kompressiblen Elements 50 gebildet wird, entstehen in dem Drucksensorsystem abgewinkelte Kanäle für die Medienzuführung. Im Falle des Einfrierens des Mediums wird somit die Höhe der Eissäule unterhalb des Drucksensorelements 10 minimiert.

Das Drucksensorsystem 1 umfasst weiter ein Gehäuse 60, in dem das Drucksensorelement 10 und das Trägerelement 20 angeordnet sind. Der Strömungskanal 30 als auch der Hohlraum 40 erstrecken sich in das Gehäuse 60. Die Anbindung des Trägerelements 20 zu dem Gehäuse 60 kann über ein radiales Dichtungssystem erfolgen. Bei der in Figur 1 dargestellten Ausführungsform des Drucksensorsystems ist zwischen dem Trägerelement 20 und dem Gehäuse 60 des Drucksensors ein Dichtungselement 70 vorhanden. Das Dichtungselement 70 kann beispielsweise als ein O-Ring ausgebildet sein.

Der Hohlraum 40 weist neben dem ersten und zweiten Bereich 41, 42 einen weiteren dritten Bereich 43 auf, der sich an den zweiten Bereich 42 des Hohlraums 40 anschließt. Der dritte Bereich 43 ist von einer Innenwand 61 des Gehäuses 60 umgeben. Das kompressible Element 50 weist einen ersten Abschnitt 51 auf, der in dem zweiten Bereich 42 des Hohlraums 40 angeordnet ist. Des Weiteren weist das kompressible Element 50 einen zweiten Abschnitt 52 auf, der in dem dritten Abschnitt 43 des Hohlraums 40 angeordnet ist. Die Querschnittsfläche des zweiten Abschnitts 52 des kompressiblen Elements 50 entspricht der Querschnittsfläche des ersten Abschnitts 51 des kompressiblen Elements. Das kompressible Element ist daher als ein zylinderförmiger kompressibler Körper ausgebildet, der in dem zweiten Bereich 42 und in dem dritten Bereich 43 des Hohlraums 40 angeordnet ist.

Die Querschnittsfläche des zweiten Abschnitts 52 des kompressiblen Elements 50 ist kleiner als die Querschnittsfläche des dritten Bereichs 43 des Hohlraums 40. Dadurch wird ein sich in das Gehäuse 60 erstreckender Teilabschnitt 33 des Strömungskanals 30 gebildet, der zwischen dem zweiten Abschnitt 52 des kompressiblen Elements 50, insbesondere der äußeren Oberfläche des zweiten Abschnitts 52 des kompressiblen Elements, und der Innenwand 61 des Gehäuses 60, die den dritten Bereich 43 des Hohlraums 40 begrenzt, verläuft. Der Teilabschnitt 33 des Strömungskanals 30 verläuft somit auch in dem Gehäuse 60. Zum Einleiten des Mediums in den Strömungskanal 30 weist das Gehäuse 60 einen Druckanschluss 62 auf.

Durch Integration der Medienzuführungskanäle in das Sensorgehäuse 60 und in das Trägerelement 20 kann das kompressible Element 50 mit einer einfachen Formgebung, beispielsweise 2¹/₂ dimensional mit der in Figur 1 gezeigten zylinderförmigen Form, realisiert werden. Formgebung und Auslegung des Trägerelements 20 und des Gehäuses 60 sind so gewählt, dass typische große Toleranzen des kompressiblen Elements 50 im Druck- und Temperaturbereich nicht zur Einschränkung der Funktion führen.

Das Gehäuse 60 kann als ein Kunststoffgehäuse ausgebildet sein. Das Drucksensorelement 10 kann aus Silizium ausgebildet sein. Das Trägerelement 20 weist vorzugsweise ein keramisches Material auf. Durch Anpassung des thermischen Ausdehnungskoeffizienten des Trägerelements 20 an das Silizium des Drucksensorelements 10 kann auf einen zusätzlichen Glasgegenkörper zwischen dem Silizium-Sensorelement 10 und dem keramischen Trägerelement 20 verzichtet werden. Dadurch gibt es auf Sensorelementebene keinen Hinterschnitt. Das Drucksensorelement 10 kann mit einem mechanisch festen und medienresistenten Verbindungsmaterial an das Trägerelement 20 angekoppelt werden. Insbesondere kann das Drucksensorelement 10 durch eine Glaslotschicht 80 mit dem Trägerelement 20 verbunden sein. Durch die Verwendung von Glaslot kann im Gegensatz zu metallischen Loten auf eine Metallisierung des Trägerelements 20 und des Drucksensorelements 10 verzichtet werden.

Gemäß einer möglichen Ausführungsform kann die Rückseite des Drucksensorelements 10, die dem mindestens einen Teilabschnitt 31 des Strömungskanals 30 zugewandt ist, eine Passivierungsschicht 90 aufweisen. Durch eine derartige Passivierung der Rückseite des Sensorelements 10 kann die Biegeplatte 11 vor einem aggressiven Medium, beispielsweise einer Harnstofflösung, geschützt werden.

Das Drucksensorsystem kann je nach Ausführungsform zur Messung eines Absolutdrucks oder eines Relativdrucks verwendet werden. Bei einer Absolutdruckmessung werden alle Drücke auf eine Druckreferenz bezogen. Eine derartige Ausgestaltungsform ist insbesondere in Figur 2 gezeigt. Bei der in Figur 2 gezeigten Ausführungsform ist auf dem Drucksensorelement 10, insbesondere über der Biegeplatte 11, eine Glaskappe 12 angeordnet. Zwischen der biegsamen Platte 11 und der Glaskappe 12 ist eine Kavität, in der ein Referenzdruck, beispielsweise ein Vakuum, herrscht.

Im Gegensatz zur Absolutdruckmessung entfällt bei einem Drucksensorelement, das zur Relativdruckmessung ausgelegt ist, die Glaskappe 12. Bei der Relativdruckmessung wird der Druck des Messmediums relativ zum Umgebungsdruck gemessen. Das Drucksensorsystem 1 ist in diesem Fall derart ausgebildet, dass von oben der Atmosphärendruck auf die biegsame Platte 11 und von unten der Druck des Mediums auf die biegsame Platte 11 einwirkt.

Gemäß einer möglichen Ausführungsform weist das Drucksensorsystem 1 einen Verdrahtungsträger 100 auf, der in Bezug auf das Trägerelement 20 als ein separater Träger beziehungsweise Bauteilkörper ausgebildet ist. Das Drucksensorsystem 1 umfasst einen Signalwandlerbaustein 110 zur Auswertung der Widerstandsänderung des Drucksensorelements aufgrund des einwirkenden Drucks des Mediums. Der Signalwandlerbaustein 110 verstärkt, normiert und kompensiert das Temperaturverhalten. Zur externen Kontaktierung umfasst das Drucksensorsystem 1 ein Kontaktierungselement 120, das in einem Steckergehäuse 130 angeordnet ist.

Bei der in den Figuren 1 und 2 gezeigten Ausführungsform des Drucksensorsystems 1 mit separatem Trägerelement 20 und Verdrahtungsträger 100 ist der Signalwandlerbaustein 110 auf dem Verdrahtungsträger 100 angeordnet. Der Verdrahtungsträger 100 ist auf dem Trägerelement 20 angeordnet. Das Trägerelement 20 ragt insbesondere in eine Aussparung des Verdrahtungsträgers 100 hinein.

Insbesondere bei einer Ausführungsform mit einem von dem Trägerelement 20 separaten Verdrahtungsträger 100 ergibt sich ein großer Gestaltungsspielraum bei der Materialauswahl des Verdrahtungsträgers, da der Verdrahtungsträger nicht durch die hohen Temperaturen, die beim Glaslotprozess auftreten, geführt werden muss. Der Einsatz verschiedener Verschaltungen und Signalwandlerbausteine auf angepassten Verdrahtungsträgern kann ohne Änderung des grundsätzlichen Aufbaus des Drucksensorsystems erfolgen. Insbesondere kann das Trägerelement 20 mit dem Strömungskanal 30 unverändert bleiben. Gemäß einer anderen Ausführungsform des Drucksensorsystems 1 kann auf den separaten Verdrahtungsträger 100 gänzlich verzichtet werden. Bei dieser Ausgestaltungsform werden die elektrischen Bauelemente, insbesondere der Signalwandlerbaustein 110, unmittelbar auf dem Trägerelement 20 angeordnet und elektrisch über Drahtbondverbindungen verbunden.

### Bezugszeichenliste

- 1: Drucksensorsystem
- 10: Drucksensorelement
- 11: biegsame Platte
- 20: Trägerelement
- 21: Innenwand des Trägerelements
- 30: Strömungskanal
- 31, 32, 33: Teilabschnitte des Strömungskanals
- 40: Hohlraum
- 41, 42, 43: Bereiche des Hohlraums
- 50: kompressibles Element
- 60: Gehäuse
- 70: Dichtungselement
- 80: Glaslotschicht
- 90: Passivierungsschicht
- 100: Verdrahtungsträger
- 110: Signalwandlerbaustein
- 120: Kontaktierungselement
- 130: Steckeranschluss

## Patentansprüche

1. Drucksensorsystem mit Schutz vor einfrierendem Medium, umfassend:
- ein Drucksensorelement (10) mit einer biegsamen Platte (11), wobei das Drucksensorelement als ein piezoresistives Sensorelement ausgebildet ist,
- ein Trägerelement (20), auf dem das Drucksensorelement (10) angeordnet ist,
- wobei in dem Trägerelement (20) ein Strömungskanal (30) zur Zuführung des Mediums zu der biegsamen Platte (11) verläuft,
- wobei der Strömungskanal (30) mindestens einen Teilabschnitt (31) aufweist, dessen Längsrichtung senkrecht unter der biegsamen Platte (11) verläuft,
- wobei der Kanalquerschnitt des mindestens einen Teilabschnitts (31) des Strömungskanals (30) an keiner Stelle innerhalb des Teilabschnitts des Strömungskanals kleiner als die Fläche der biegsamen Platte (11) ist,
- einen Hohlraum (40) mit einem ersten Bereich (41) und mit einem sich daran anschließenden zweiten Bereich (42),
- wobei der erste und zweite Bereich (41, 42) des Hohlraums in dem Trägerelement verlaufen und von einer Innenwand (21) des Trägerelements (20) umgeben sind,
- wobei sich der erste Bereich (41) des Hohlraums trichterförmig in Richtung der biegsamen Platte (11) des Drucksensorelements (10) verjüngt,
- wobei der mindestens eine Teilabschnitt (31) des Strömungskanals (30) von dem ersten Bereich (41) des Hohlraums (40) gebildet wird,
- wobei der zweite Bereich (42) des Hohlraums (40) zylinderförmig ausgebildet ist,
- ein zylinderförmiges kompressibles Element (50), das in dem zweiten Bereich (42) des Hohlraums (40) unter dem trichterförmigen ersten Bereich (41) des Hohlraums angeordnet ist,
- wobei das kompressible Element (50) dazu ausgebildet ist, beim Einfrieren des Mediums von dem Medium komprimiert zu werden,
- wobei eine Querschnittsfläche des zweiten Bereichs (42) des Hohlraums (40) größer als die Querschnittsfläche der Öffnung des trichterförmigen ersten Bereichs (41) des Hohlraums ist,
- wobei eine Querschnittsfläche des kompressiblen Elements (50) mindestens so groß wie die Querschnittsfläche der Öffnung des trichterförmigen ersten Bereichs (41) des Hohlraums (40) ist,
- wobei die Querschnittsfläche des kompressiblen Elements (50) kleiner als die Querschnittsfläche des zweiten Bereichs (42) des Hohlraums (40) ist.

2. Drucksensorsystem nach Anspruch 1,
wobei der mindestens eine Teilabschnitt (31) des Strömungskanals (30) an keiner Stelle innerhalb des mindestens einen Teilabschnitts (31) des Strömungskanals eine Hinterschneidung aufweist.

3. Drucksensorsystem nach Anspruch 1 oder 2,
- wobei der Strömungskanal (30) in dem Trägerelement (20) mindestens einen weiteren Teilabschnitt (32) aufweist, der sich an den mindestens einen Teilabschnitt (31) des Strömungskanals anschließt,
- wobei der weitere Teilabschnitt (32) des Strömungskanals (30) zwischen dem kompressiblen Element (50) und einer den zweiten Bereich (42) des Hohlraums begrenzenden Innenwand (21) des Trägerelements (20) liegt.

4. Drucksensorsystem nach einem der Ansprüche 1 bis 3, umfassend:
- ein Gehäuse (60), in dem das Drucksensorelement (10) und das Trägerelement (20) angeordnet sind,
- wobei sich der Strömungskanal (30) und der Hohlraum (40) in das Gehäuse (60) erstrecken,
- wobei zwischen dem Trägerelement (20) und dem Gehäuse (60) ein Dichtungselement (70) vorhanden ist.

5. Drucksensorsystem nach Anspruch 4,
- wobei der Hohlraum (40) einen dritten Bereich (43) aufweist, der sich an den zweiten Bereich (42) des Hohlraums (40) anschließt und von einer Innenwand (61) des Gehäuses umgeben ist,
- wobei ein erster Abschnitt (51) des kompressiblen Elements (50) in dem zweiten Bereich (42) des Hohlraums (40) und ein zweiter Abschnitt (52) des kompressiblen Elements (50) in dem dritten Bereich (43) des Hohlraums angeordnet sind,
- wobei die Querschnittsfläche des zweiten Abschnitts (52) des kompressiblen Elements (50) kleiner als die Querschnittsfläche des dritten Bereichs (43) des Hohlraums (40) ist.

6. Drucksensorsystem nach Anspruch 5,
wobei ein sich in das Gehäuse (60) erstreckender Teilabschnitt (33) des Strömungskanals (30) zwischen dem zweiten Abschnitt (52) des kompressiblen Elements (50) und der den dritten Bereich (43) des Hohlraums (40) begrenzenden Innenwand (61) des Gehäuses (60) verläuft.

7. Drucksensorsystem nach einem der Ansprüche 1 bis 6,
- wobei das Drucksensorelement (10) aus Silizium gebildet ist,
- wobei das Trägerelement (20) ein keramisches Material aufweist,
- wobei das Drucksensorelement (10) durch eine Glaslotschicht (80) mit dem Trägerelement (20) verbunden ist.

8. Drucksensorsystem nach einem der Ansprüche 1 bis 7,
wobei eine Rückseite des Drucksensorelements (10), die dem mindestens einen Teilabschnitt (31) des Strömungskanals (30) zugewandt ist, eine Passivierungsschicht (90) aufweist.

9. Drucksensorsystem nach einem der Ansprüche 1 bis 8, umfassend:
- einen Signalwandlerbaustein (110) zur Erzeugung eines elektrischen Signals in Abhängigkeit von einem auf die biegsame Platte (11) des Drucksensorelements (10) einwirkenden Drucks des Mediums,
- einen von dem Trägerelement (20) separaten Verdrahtungsträger (100), auf dem der Signalwandlerbaustein (110) angeordnet ist,
- wobei der Verdrahtungsträger (100) auf dem Trägerelement (20) angeordnet ist.

10. Drucksensorsystem nach einem der Ansprüche 1 bis 9, umfassend:
- einen Signalwandlerbaustein (110) zur Erzeugung eines elektrischen Signals in Abhängigkeit von einem auf die biegsame Platte (11) des Drucksensorelements (10) einwirkenden Drucks des Mediums,
- wobei der Signalwandlerbaustein (110) unmittelbar auf dem Trägerelement (20) angeordnet ist.

## Claims

1. Pressure sensor system with protection against freezing medium, comprising:
- a pressure sensor element (10) having a flexible plate (11), wherein the pressure sensor element is formed as a piezo resistive sensor element,
- a carrier element (20) on which the pressure sensor element (10) is arranged,
- wherein a flow channel (30) for supplying the medium to the flexible plate (11) is provided in the carrier element (20),
- wherein a longitudinal direction of at least one partial section (31) of the flow channel (30) extends vertically below the flexible plate (11),
- wherein the channel cross-section of the at least one partial section (31) of the flow channel (30) is not smaller than the area of the flexible plate (11) at any point within the partial section of the flow channel,
- a cavity (40) having a first region (41) and an adjoining second region (42),
- wherein the first and second regions (41, 42) of the cavity extend within the carrier element and are surrounded by an inner wall (21) of the carrier element (20),
- wherein the first region (41) of the cavity tapers in a funnel shape towards the flexible plate (11) of the pressure sensor element (10),
- wherein the at least one partial section (31) of the flow channel (30) is formed by the first region (41) of the cavity (40),
- wherein the second region (42) of the cavity (40) is cylindrical,
- a cylindrical compressible element (50) located in the second region (42) of the cavity (40) below the funnel-shaped first region (41) of the cavity,
- said compressible element (50) being adapted to be compressed by said medium upon freezing of said medium,
- wherein a cross-sectional area of the second region (42) of the cavity (40) is larger than the cross-sectional area of the opening of the funnel-shaped first region (41) of the cavity,
- wherein a cross-sectional area of the compressible element (50) is at least as large as the cross-sectional area of the opening of the funnel-shaped first region (41) of the cavity (40),
- wherein the cross-sectional area of the compressible element (50) is smaller than the cross-sectional area of the second region (42) of the cavity (40).

2. Pressure sensor system according to claim 1,
wherein the at least one partial section (31) of the flow channel (30) does not have an undercut at any location within the at least one partial section (31) of the flow channel.

3. Pressure sensor system according to claim 1 or 2,
- wherein the flow channel (30) in the carrier element (20) has at least one further partial section (32) which adjoins the at least one partial section (31) of the flow channel,
- wherein the further partial section (32) of the flow channel (30) lies between the compressible element (50) and an inner wall (21) of the carrier element (20) bounding the second region (42) of the cavity.

4. Pressure sensor system according to any one of claims 1 to 3, comprising:
- a housing (60) in which the pressure sensor element (10) and the carrier element (20) are arranged,
- wherein the flow channel (30) and the cavity (40) extend into the housing (60),
- wherein a sealing element (70) is provided between the carrier element (20) and the housing (60).

5. Pressure sensor system according to claim 4,
- wherein the cavity (40) comprises a third region (43) which is adjacent to the second region (42) of the cavity (40) and is surrounded by an inner wall (61) of the housing,
- wherein a first portion (51) of the compressible element (50) is disposed in the second region (42) of the cavity (40) and a second portion (52) of the compressible element (50) is disposed in the third region (43) of the cavity,
- wherein the cross-sectional area of the second portion (52) of the compressible element (50) is smaller than the cross-sectional area of the third region (43) of the cavity (40).

6. Pressure sensor system according to claim 5,
wherein a partial section (33) of the flow channel (30) extending into the housing (60) extends between the second section (52) of the compressible element (50) and the inner wall (61) of the housing (60) defining the third region (43) of the cavity (40).

7. Pressure sensor system according to any one of claims 1 to 6,
- wherein the pressure sensor element (10) is formed of silicon,
- wherein the carrier element (20) comprises a ceramic material,
- wherein the pressure sensor element (10) is connected to the carrier element (20) by a glass solder layer (80).

8. Pressure sensor system according to any one of claims 1 to 7,
wherein a rear side of the pressure sensor element (10) facing the at least one partial section (31) of the flow channel (30) has a passivation layer (90).

9. Pressure sensor system according to any one of claims 1 to 8, comprising:
- a signal converter module (110) for generating an electrical signal as a function of a pressure of the medium acting on the flexible plate (11) of the pressure sensor element (10),
- a wiring carrier (100) which is separate from the carrier element (20) and on which the signal converter module (110) is arranged,
- wherein the wiring carrier (100) is arranged on the carrier element (20).

10. Pressure sensor system according to any one of claims 1 to 9, comprising:
- a signal converter module (110) for generating an electrical signal in dependence on a pressure of the medium acting on the flexible plate (11) of the pressure sensor element (10),
- wherein the signal transducer module (110) is arranged directly on the carrier element (20).

## Revendications

1. Système de détection de pression pourvu d'une protection contre un milieu en train de geler, ledit système comprenant :
- un élément de détection de pression (10) pourvu d'une une plaque flexible (11), l'élément de détection de pression étant réalisé sous la forme d'un élément de détection piézo-résistif,
- un élément de support (20) sur lequel est disposé l'élément de détection de pression (10),
- un canal d'écoulement (30) destiné à amener le milieu à la plaque flexible (11) s'étendant dans l'élément de support (20),
- le canal d'écoulement (30) comportant au moins une portion (31) dont la direction longitudinale s'étend perpendiculairement sous la plaque flexible (11),
- la section transversale de canal de l'au moins une portion (31) du canal d'écoulement (30) n'étant en aucun point à l'intérieur de la portion du canal d'écoulement inférieure à la surface de la plaque flexible (11),
- une cavité (40) pourvue d'une première zone (41) et d'une deuxième zone (42) contiguë à celle-ci,
- les première et deuxième zones (41, 42} de la cavité s'étendant dans l'élément de support et étant entourées par une paroi intérieure (21) de l'élément de support (20),
- la première zone (41) de la cavité se rétrécissant en forme d'entonnoir en direction de la plaque flexible (11) de l'élément de détection de pression (10),
- l'au moins une portion (31) du canal d'écoulement (30) étant formée par la première zone (41) de la cavité (40),
- la deuxième zone (42) de la cavité (40) étant de forme cylindrique,
un élément compressible (50) de forme cylindrique qui est disposé dans la deuxième zone (42) de la cavité (40) sous la première zone (41) en d'entonnoir de la cavité,
- l'élément compressible (50) étant conçu pour être comprimé par le milieu en train de geler,
- une surface en coupe transversale de la deuxième zone (42) de la cavité (40) étant plus supérieure à la surface en coupe transversale de l'ouverture de la première zone (41) en forme d'entonnoir de la cavité,
- une surface en coupe transversale de l'élément compressible (50) étant au moins aussi grande que la surface en coupe transversale de l'ouverture de la première zone (41) en forme d'entonnoir de la cavité (40),
- la surface en coupe transversale de l'élément compressible (50) étant inférieure à la surface en coupe transversale de la deuxième zone (42) de la cavité (40).

2. Système de détection de pression selon la revendication 1, l'au moins une portion (31) du canal d'écoulement (30) ne comportant une contre-dépouille en aucun point à l'intérieur de l'au moins une portion (31) du canal d'écoulement.

3. Système de détection de pression selon la revendication 1 ou 2,
- le canal d'écoulement (30) situé dans l'élément de support (20) comportant au moins une autre portion (32) qui est contiguë à l'au moins une portion (31) du canal d'écoulement,
- l'autre portion (32) du canal d'écoulement (30) étant situee entre l'élément compressible (50) et une paroi intérieure (21) de l'élément de support (20) qui délimite la deuxième zone (42) de la cavité.

4. Système de détection de pression selon l'une des revendications 1 à 3, comprenant :
- un boîtier (60) dans lequel sont disposés l'élément de détection de pression (10) et l'élément de support (20),
- le canal d'écoulement (30) et la cavité (40) s'étendant jusque dans le boîtier (60),
- un élément d'étanchéité (70) étant présent entre l'élément de support (20) et le boîtier (60).

5. Système de détection de pression selon la revendication 4,
- la cavité (40) comportant une troisième zone (43) qui est contiguë à la deuxième zone (42) de la cavité (40) et qui est entourée par une paroi intérieure (61) du boîtier,
- une première partie (51) de l'élément compressible (50) étant disposée dans la deuxième zone (42) de la cavité (40) et une deuxième partie (52) de l'élément compressible (50) étant disposée dans la troisième zone (43) de la cavité,
- la surface en coupe transversale de la deuxième partie (52) de l'élément compressible (50) étant plus petite que la surface en coupe transversale de la troisième zone (43) de la cavité (40).

6. Système de détection de pression selon la revendication 5, une portion (33) du canal d'écoulement (30), laquelle s'étend jusque dans le boîtier (60), s'étendant entre la deuxième partie (52) de l'élément compressible (50) et la paroi intérieure (61) du boîtier (60), laquelle délimite la troisième zone (43) de la cavité (40).

7. Système de détection de pression selon l'une des revendications 1 à 6,
- l'élément de détection de pression (10) étant formé à partir de silicium,
- l'élément de support (20) comprenant un matériau céramique,
- l'élément de détection de pression (10) étant relié à l'élément de support (20) par une couche de soudure en verre (80).

8. Système de détection de pression selon l'une des revendications 1 à 7, un côté arrière de l'élément de détection de pression (10), qui fait face à l'au moins une portion (31) du canal d'écoulement (30), comportant une couche de passivation (90).

9. Système de détection de pression selon l'une des revendications 1 à 8, comprenant :
- un module convertisseur de signal (110) destiné à générer un signal électrique en fonction d'une pression du milieu qui est exercée sur la plaque flexible (11) de l'élément de détection de pression (10),
- un support de câblage (100) qui est distinct de l'élément de support (20) et sur lequel est disposé le module convertisseur de signal (110),
- le support de câblage (100) étant disposé sur l'élément de support (20).

10. Système de détection de pression selon l'une des revendications 1 à 9, comprenant :
- un module convertisseur de signal (110) destiné à générer un signal électrique en fonction d'une pression du milieu qui est exercée sur la plaque flexible (11) de l'élément de détection de pression (10),
- le module convertisseur de signal (110) étant disposé directement sur l'élément de support (20).
